# EUROPÄISCHE PATENTSCHRIFT

(11) **EP 0 809 037 B1**
(45) Veröffentlichungstag und Bekanntmachung des Hinweises auf die Patenterteilung: **13.09.2000**
(21) Anmeldenummer: 97106426.6
(22) Anmeldetag: 18.04.1997
(51) Int. Cl.: F16D 65/12

(54) **Bremsscheibenanordnung, insbesondere für Schienenfahrzeug-Scheibenbremsen**
Brake disc arrangement, especially for railway vehicle disc brakes
Arrangement de disque de frein, en particulier pour freins à disques de véhicules ferroviaires

(30) Priorität: 03.05.1996 DE 19617705; 01.04.1997 DE 19713431
(43) Veröffentlichungstag der Anmeldung: 26.11.1997
(73) Patentinhaber: KNORR-BREMSE Systeme für Schienenfahrzeuge GmbH, 80809 München (DE)
(72) Erfinder: Wirth, Xaver, Dr., 85737 Ismaning (DE); Schlenk, Ludwig, Dr., 85247 Schwabhausen (DE)

(56) Entgegenhaltungen:
- EP-A- 0 062 774
- EP-A- 0 429 211
- EP-A- 0 515 193
- AU-A- 4 175 578
- DE-A- 1 530 241
- DE-A- 2 405 235
- DE-A- 3 224 876
- DE-B- 1 044 857
- GB-A- 1 105 370
- GB-A- 2 053 177
- US-A- 4 006 803

## Beschreibung

Die Erfindung betrifft eine Bremsscheibenanordnung nach dem Oberbegriff des Anspruches 1.

Aus der DE 44 17 813 sind Radbremsscheiben für Schienenfahrzeuge bekannt, die zu beiden Seiten eines Radsteges Reibringe aufweisen, wobei die Reibringe mit durchgehenden Befestigungsschrauben gegenüber der Radscheibe verspannt sind. Ein Teil des Bremsmomentes wird über den Reibschluß zwischen Scheibe und Rad und ein weiterer Teil des Bremsmomentes über eine Doppel-Gleitsteinanordnung übertragen. Die Doppelgleitsteine durchsetzen die Bremsscheibe im Bereich der Reibringe. Zu beiden Seiten der Radscheibe sind Zentrieraugen der beiden Bremsringe an den von den Seiten der Radscheibe vorstehenden Enden der Doppelgleitsteine geführt.

Die vorstehend beschriebene Art der Befestigung der Bremsringe an der Radscheibe hat sich zwar grundsätzlich bewährt, ist aber in erster Linie für metallische Werkstoffe geeignet. Für Bremsringe aus Werkstoffen, die sehr hohe Temperaturen erreichen, ist die vorstehend genannte Befestigung dagegen nicht einsetzbar, da die hohen Temperaturen sonst direkt auf die metallischen Räder übertragen werden.

Aus der US-A-4,006,803 ist eine Bremsscheibenanordnung, insbesondere für Schienenfahrzeug-Scheibenbremsen, mit einer Radbremsscheibe aus wenigstens zwei Reibringen bekannt, die mittels eines Verbindungsbolzens, der in seiner Position gesichert ist, mit dem Fahrzeugrad verbunden ist. Die radiale Führung und Zentrierung erfolgt über eine am Kopf des Bolzens einander auf der Oberfläche desselben gegenüberliegenden Gleitsteinverbindung, welche den Bolzen in seiner radialen Nut, die von zwei voneinander beabstandeten Rippen gebildet wird, lagert. Zur axialen Fixierung der Reibringe relativ zum Rad weist dieses wenigstens eine klammerartige Halteeinrichtung zwischen Rad und Reibringen auf. Die klammerartige Halteeinrichtung weist zwei radial nach außen ragende Klammerarme mit verdickten Enden auf, die auf dem äußeren Radumfang in einer Nut ruhen. Diese klammerartige Haltevorrichtung ist unter Spannung montiert. Die so gelagerten Radbremsscheiben können sich ohne Schwierigkeiten beim Erwärmen durch den Bremsvorgang in radialer Richtung ausdehnen. Die Kühlrippen und der umlaufende Zwischenraum zwischen klammerartiger Halterung und Radbremsscheibe gewährleisten eine gute Luftzirkulation und damit eine gute Kühlung der Bremsen. Damit ist die in der US-A-4,006,803 beschriebene klammerartige Halterung vorzugsweise für belüftete Bremsringe geeignet.

Die Erfindung zielt daher darauf ab, eine auch für Bremsscheiben aus einem Material, welches bei Bremsungen sehr hohe Temperaturen (höher als bei Stahlscheiben üblich) erreicht, geeignete Bremsscheibenanordnung für Schienenfahrzeug-Scheibenbremsen zu schaffen.

Die Erfindung erreicht dieses Ziel durch den Gegenstand des Anspruches 1. Ein besonderer Vorteil der Erfindung besteht in der vorteilhaften Klammerhalterung, welche derart angeordnet und ausgelegt ist, daß sie nur wenig Wärme auf die Räder überträgt.

Die Erfindung realisiert zudem erstmals den Einsatz und die Verwendung nichtmetallischer Werkstoffe als Bremsscheibe, insbesondere als Bremsring (Ansprüche 15, 16). Ein besonderer Vorteil ist darin zu sehen, daß sie erstmals die Verwendung und den Einsatz von CFC- und CMC-Materialien zur Herstellung von Radbremsscheiben ermöglicht. Die Erfindung schafft Elemente zur Verbindung der Bremsringe mit der Nabe, welche selbst thermisch außerordentlich belastbar sind, die aber derart ausgelegt sind, daß sie die Temperatur nicht an die Räder weiterleiten. Die erfindungsgemäße Lösung ist damit sowohl für belüftete als auch für nicht belüftete Bremsringe geeignet. Die erfindungsgemäßen Halterungen gewährleisten zudem eine gute Parallelität der Reibflächen zueinander. Durch optionale Rillen auf den Kontaktflächen zwischen Rad und Scheibennocken ist der Wärmefluß weiter reduzierbar.

Die Erfindung zeichnet sich durch eine leichte Montagemöglichkeit ohne Spezialwerkzeuge aus, sie ist kosten- und gewichtsoptimiert und mit baugleichen Standardscheiben kompatibel. Dabei ist es weiter vorteilhaft, daß nur kleine Berührungsflächen zwischen den Halterungen und den Reibringen mit der Folge einer geringen Wärmeweiterleitung bestehen. Ein weiterer Vorteil der Erfindung ist darin zu sehen, daß die Reibringe nur mit relativ kleinen Bohrungen zum Durchstecken eines Sechskantschlüssels versehen werden müssen.

Weitere vorteilhafte Varianten der Erfindung sind in den Unteransprüchen angegeben.

Nachfolgend wird die Erfindung anhand von Ausführungsbeispielen unter Bezug auf die Zeichnung näher beschrieben. Es zeigt:
- Fig. 1: eine Schnittansicht einer ersten Ausführungsform einer erfindungsgemäßen Bremsscheibenanordnung für Schienenfahrzeugbremsen;
- Fig. 2: eine um 90° gedrehte, teilgeschnittene Seitenschnittansicht des Ausführungsbeispiels aus Fig. 1;

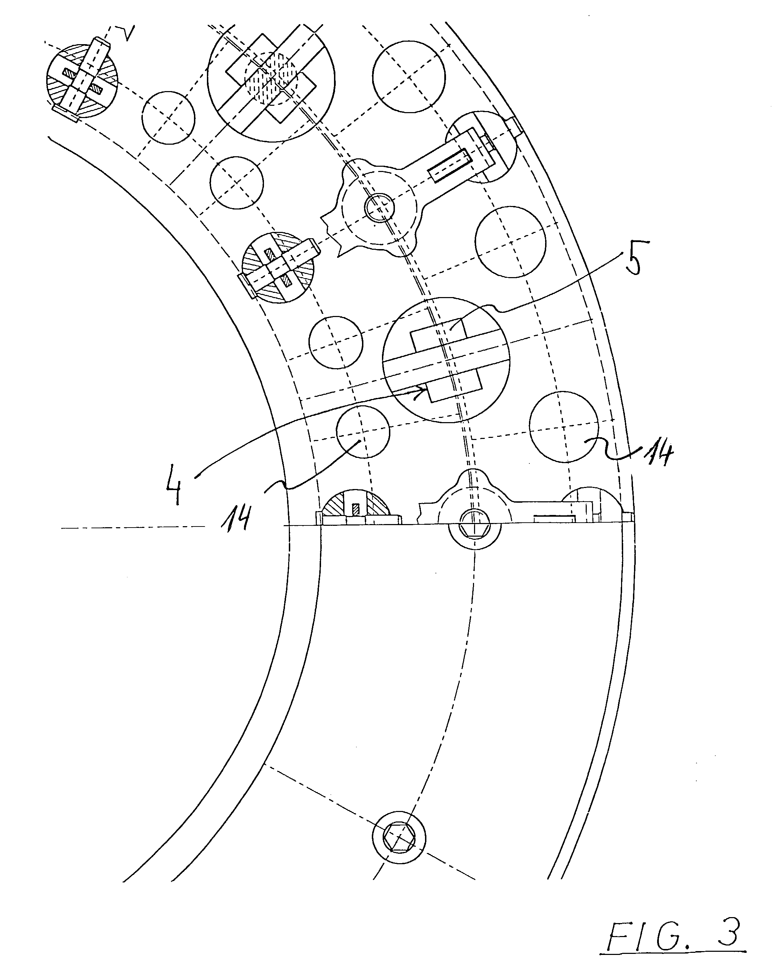

- Fig. 3: eine weitere teilgeschnittene Ansicht des Ausführungsbeispiels aus Fig. 1.
- Fig. 4: ist eine stark vergrößerte Einzel-Schnittasicht unter Darstellung des reduzierten Wärmeflusses (thermische Abkopplung) zwischen dem Bremsring und der als Federbügel ausgebildeten Halteklammer; und
- Fig. 5: ist eine hälftige Schnittansicht der erfindungsgemäßen Bremsscheibenanordnung unter Darstellung eines Wärmeschutzbleches.

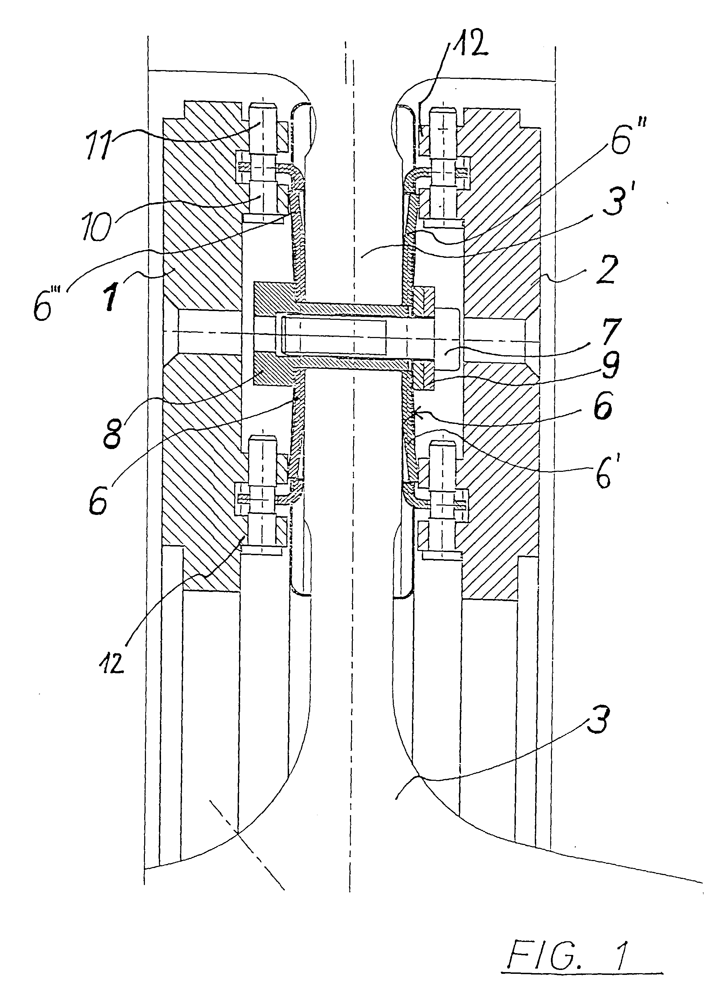

Zunächst sei das Ausführungsbeispiel aus Fig. 1 beschrieben. Nach Fig. 1 weist eine erfindungsgemäße Bremsscheibenanordnung für Schienenfahrzeugbremsen zwei identische (einen linken und einen rechten) Reib- bzw. Bremsringe 1, 2 auf, welche beidseits eines Metallrades 3 angeordnet sind.

Jeder der Reibringe 1, 2 weist an seinem Umfang, zum Rad 3 hin gerichtet, mindestens drei, bevorzugt sechs, Augen auf, die mit radialgerichteten Nuten 4 versehen sind. Die Nuten 4 stehen im Formschluß mit Doppelgleitsteinen 5, welche Bohrungen im Radsteg durchgreifen (siehe hierzu die DE 44 17 813). Durch diese Verbindung sind die Reibringe 1, 2 radial zum Rad 3 lagegesichert, wobei die Doppelgleitsteine 5 zudem im wesentlichen die Übertragung des Bremsmomentes zwischen den Reibringen 1, 2 und dem Rad 3 sichern.

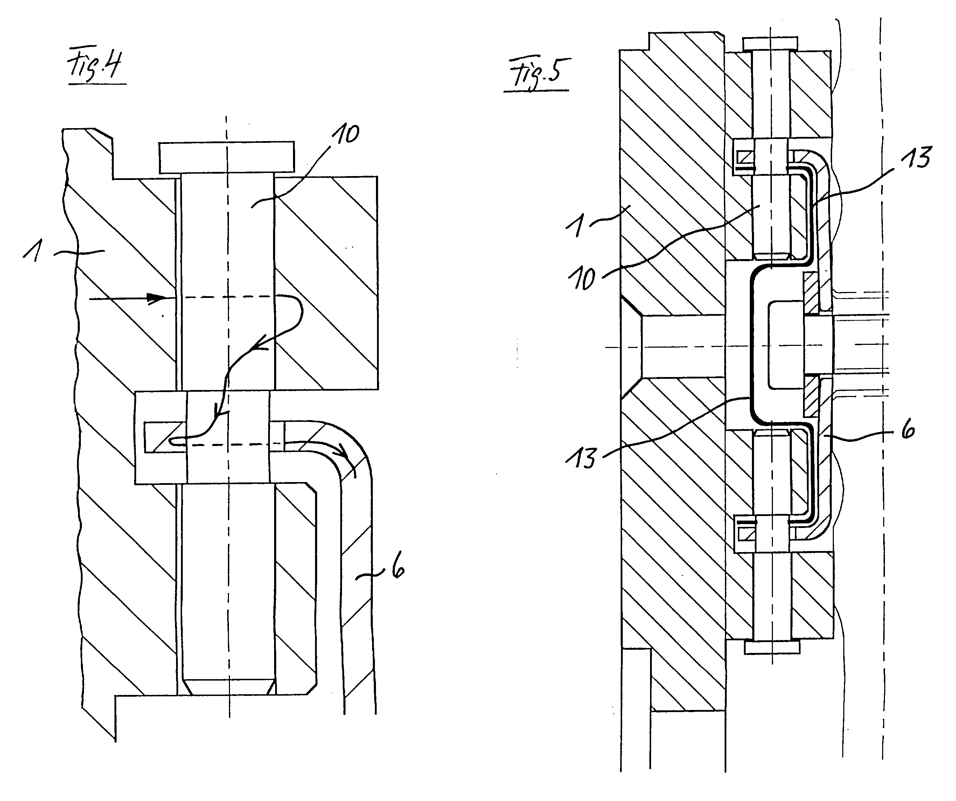

Die axiale Befestigung der Reibringe 1, 2 erfolgt erfindungsgemäß über eine vorgegebene Anzahl klammerartiger Halterungen 6, die eine zentrale Bohrung aufweisen und mit dieser axial am Radsteg 3' angeschraubt sind (Schraube 7, Mutter 8). Um ein Setzen der Schraube 7 zu verhindern, liegen Tellerfedern 9 im Klemmstrang der Schraube 7. Die Mutter 8 der Schraubenverbindung ist mit der Halterung 6 material- oder formschlüssig verbunden. Ausgehend von der zentralen Bohrung erstrecken sich zwei Klammerarme 6', 6'' radial nach außen, die in ihrem äußeren Endbereich in geschlitzte Bolzen 10 mit Gegenstück 11 eingreifen, welche in Augen von Noppen 12 der Reibringe 1, 2 eingesetzt sind. Die Bolzen 10 sind hochwarmfest ausgelegt. Auf diese Weise ergibt sich eine äußerst geringe Wärmeableitung über den Wärmeableitungsweg von den Reibringen 1, 2 zu den Klammern 6 und zum Rad 3 (Fig. 4). Die von den Klammern 6 abgegebene Wärmeenergie ist so gering, daß die Räder 3 quasi nicht nachteilig beeinflußt werden. Nach einer vorteilhaften Ausgestaltung sind zwischen den Reibringen 1,2 und den Klammern 6 Wärmeschutzbleche 13 (Fig. 5) vorgesehen, welche der Formgebung der Klammern angepaßt sind und einen wirksamen Schutz gegenüber unmittelbarer Wärmeabstrahlung von den Reibringen vermitteln.

Durch die vorstehend beschriebene Art der Befestigung ergibt sich ferner quasi ein Freiheitsgrad zwischen den Bremsringen 1, 2 und dem Rad 3, welcher die Wirkungen der auftetenden großen Unterschiede der Wärmekoeffizienten der verwendeten Materialien ausgleichen kann.

Bei Verwendung der Bolzen 10 können sich die Reibringe unter radial exakter Führung relativ zum Rad bewegen. Es erfolgt also keine radiale Aufbiegung der Klammer bei Relativbewegung, was bessere Dimensionierung zuläßt. Grundsätzlich besteht somit Funktionstrennung, d.h. die axiale Haltefunktion übernimmt die Klammer, während die radiale Führung der Reibringe und die Drehmomentübertragung von den Gleitsteinen am Rad übernommen werden.

Alternativ ist es möglich, die Halterungen 6 in Nuten am Innen- und Außenrand der Bremsringe 1, 2 zu befestigen (nicht dargestellt). Die Halterungen 6 gewährleisten die axiale Fixierung im wesentlichen durch ihre Vorspannung. Klemmvorsprünge 6''' gewährleisten eine leichte Montage. Es ist auch möglich, die klammerartigen Halterungen 6 auf den Noppen 12 der Reibringe 1, 2 mit Schrauben, Nieten, Bügeln u.ä. Einrichtungen zu befestigen.

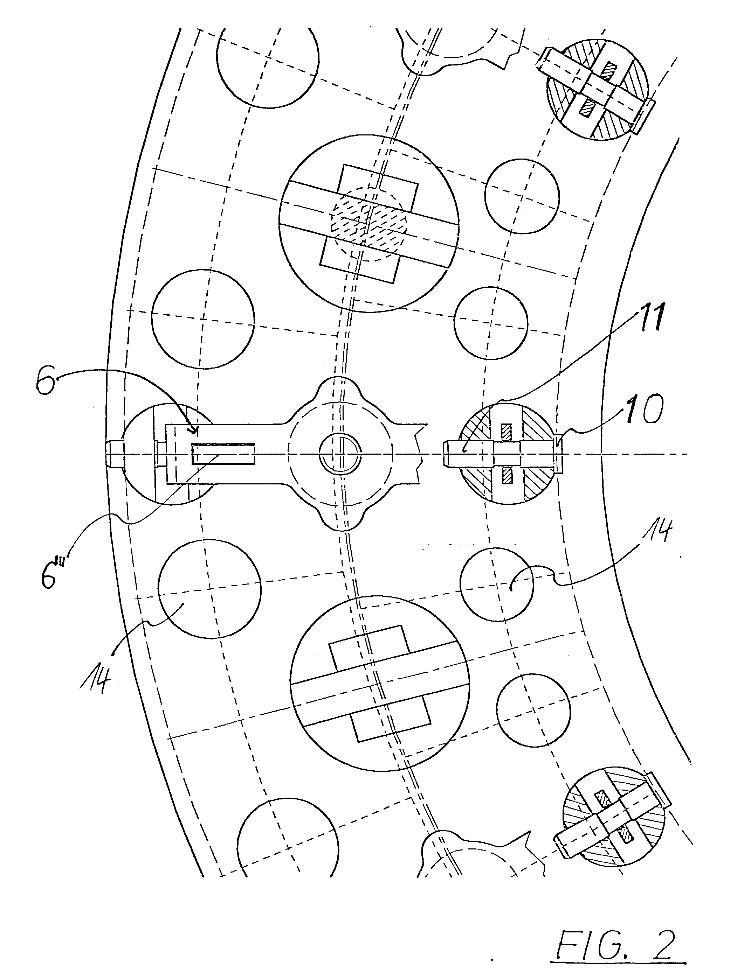

Die Reibringe 1, 2 liegen über Berührzapfen 14 am Rad 3 an (siehe Fig. 2, in der Schnittansicht der Fig. 1 nicht erkennbar). Die Berührzapfen 14 können optional eine Wärmedämmschicht aufweisen (z.B. aus Keramik), um den Wärmefluß von den Reibringen 1, 2 zum Rad 3 weiter zu verringern.

Zusammenfassend sind die Halterungen 6 so ausgeformt, daß sie durch das Anziehen der Schraube 7 axial vorgespannt werden. Die Reibringe 1, 2 werden dadurch mit Kühlnocken an den Teller des Rades 3 gepreßt. Zur Abschirmung von Wärmestrahlung kann das optionale Wärmeschutzblech 13 vorgesehen sein. Die gesamte Anbindung der Reibringe 1, 2 ist als vorgespannt formschlüssig zu betrachten. Die Halterung 6 kann bei einer Kombination mit einem unbelüfteten Bremsring auch als Kombiklammer mit Abstandshalterung ausgelegt sein und/oder Durchbrüche zur Kühlung aufweisen. Eine zusätzliche Verdrehsicherung ist durch einen in den Radteller 3 greifenden Stift erzielbar.

Vorteilhafterweise besteht die Halteeinrichtung 6 aus warmfestem Stahl oder CMC-Verbundmaterial. Die Reibringe 1, 2 werden erfindungsgemäß vorteilhafterweise aus einem Verbundwerkstoff gefertigt, insbesondere aus CFC- oder CMC-Material (CMC = CERAMIC MATRIX COMPOSITE). Die Erfindung eignet sich aufgrund der dynamischen Belastungen zudem insbesondere für Reibringe 1, 2 aus Materialien, die eine geringe Dichte besitzen (CMC; CFC: Dichte <= 2 Kg/cdm).

### Bezugszeichenliste

- Reibringe: 1, 2
- Rad: 3
- Nuten: 4
- Doppelgleitsteinen: 5
- Halterungen: 6
- Schraube: 7
- Hülse: 8
- Tellerfedern: 9
- Bolzen: 10
- Gegenstück: 11
- Noppen: 12
- Wärmeschutzblech: 13
- Berührzapfen: 14

## Patentansprüche

1. Bremsscheibenanordnung, insbesondere für Schienenfahrzeug-Scheibenbremsen, mit einer Radbremsscheibe aus wenigstens zwei Reibringen (1, 2), die mittels einer Scheiben-/Radverbindung an einem Rad (3) befestigt sind, wobei die radiale Zentrierung und Führung über eine Gleitsteinverbindung (4, 5) erfolgt, wobei zur axialen Fixierung der Reibringe (1, 2) relativ zum Rad (3) wenigstens eine klammerartige Halteeinrichtung (6) zwischen den Reibringen (1, 2) und dem Rad (3) angeordnet ist, und wobei die Halteeinrichtung (6) axial am Radsteg befestigt ist und zwei radial nach außen ragende Klammerarme (6', 6") aufweist, **dadurch gekennzeichnet**, daß die Halteeinrichtung (6) in Klemmeinrichtungen (10, 11) eingreift, welche in Augen der Reibringe (1, 2) fixiert sind.

2. Bremsscheibenanordnung nach Anspruch 1, **dadurch gekennzeichnet**, daß die Halteeinrichtung (6) beweglich in die Klemmeinrichtungen (10, 11) eingreift.

3. Bremsscheibenanordnung nach Anspruch 1 oder 2, **dadurch gekennzeichnet**, daß die Klammerarme (6', 6") an ihrem radial außen liegenden Ende mit Klemmvorsprüngen (6"') versehen sind.

4. Bremsscheibenanordnung nach einem der Ansprüche 1 bis 3, **dadurch gekennzeichnet**, daß die Augen in Noppen (12) der Reibringe (1, 2) eingebracht sind.

5. Bremsscheibenanordnung nach einem der vorhergehenden Ansprüche, **dadurch gekennzeichnet**, daß die Halteeinrichtung (6) unter Spannung zwischen die Brems- bzw. Reibringe (1, 2) und das Rad (3) montiert ist.

6. Bremsscheibenanordnung nach einem der vorstehenden Ansprüche, **dadurch gekennzeichnet**, daß die Halteeinrichtung (6) sowohl am Innen- als auch am Außendurchmesser der Reibringe (1, 2) in eine umlaufende Nut eingreift.

7. Bremsscheibenanordnung nach einem der vorstehenden Ansprüche, **dadurch gekennzeichnet**, daß die Halteeinrichtung (6) mit dem Rad (3) verschraubt ist, wobei Tellerfedern (9) im Klemmstrang einer Schraube (7) liegen.

8. Bremsscheibenanordnung nach einem der vorstehenden Ansprüche, **gekennzeichnet** durch ein Wärmeschutzblech (13) zwischen Reibring (1, 2) und Halteeinrichtung (6).

9. Bremsscheibenanordnung nach einem der vorstehenden Ansprüche, **dadurch gekennzeichnet**, daß die Verschraubung mittels einer zweiteiligen Hülse erfolgt.

10. Bremsscheibenanordnung nach einem der vorstehenden Ansprüche, **dadurch gekennzeichnet**, daß die Halteeinrichtung (6) aus wärmefestem Stahl oder CMC-Verbundmaterial besteht.

11. Bremsscheibenanordnung nach einem der vorstehenden Ansprüche, **dadurch gekennzeichnet**, daß die Halteeinrichtung (6) an den Reibringen (1, 2) axial verschraubt ist.

12. Bremsscheibenanordnung nach einem der vorstehenden Ansprüche, **dadurch gekennzeichnet**, daß auf den Kontaktflächen zwischen dem Rad (3) und den Reibringen (1, 2) Rillen ausgeformt sind.

13. Bremsscheibenanordnung nach einem der vorstehenden Ansprüche, **dadurch gekennzeichnet**, daß die Reibringe (1, 2) über Berührzapfen (14) am Rad (3) anliegen.

14. Bremsscheibenanordnung nach einem der vorstehenden Ansprüche, **dadurch gekennzeichnet**, daß die Berührzapfen (14) eine Wärmedämmschicht aufweisen, vorzugsweise aus Keramik.

15. Bremsscheibenanordnung nach einem der vorstehenden Ansprüche, **dadurch gekennzeichnet**, daß die Reibringe (1, 2) aus einem Verbundwerkstoff bestehen.

16. Bremsscheibenanordnung nach einem der vorstehenden Ansprüche, **gekennzeichnet durch** eine Radbremsscheibe aus CFC- oder CMC-Material.

## Claims

1. Brake disc arrangement, in particular for rail vehicle disc brakes, with a wheel brake disc comprising at least two friction rings (1, 2), which are fastened to a wheel (3) by means of a disc/wheel connection, wherein the radial centring and guidance takes place by way of a slide ring connection (4, 5), wherein at least one clamp-like holding device (6) is arranged between the friction rings (1, 2) and the wheel (3) for the axial fixing of the friction rings (1, 2) relative to the wheel (3), and wherein the holding device (6) is fastened axially to the wheel web and having two clamp arms (6', 6") projecting radially to the outside, characterized in that the holding device (6) engages into clamping devices (10, 11), which are fixed in eyes of the friction rings (1, 2).

2. Brake disc arrangement according to claim 1, characterized in that the holding device (6) engages in a movable manner into the clamping devices (10, 11).

3. Brake disc arrangement according to claim 1 or 2, characterized in that the clamp arms (6', 6'') are provided with clamping projections (6''') at their end lying radially on the outside.

4. Brake disc arrangement according to one of claims 1 to 3, characterized in that the eyes are formed in knubs (12) of the friction rings (1, 2).

5. Brake disc arrangement according to one of the preceding claims, characterized in that the holding device (6) is mounted with tension between the brake or friction rings (1, 2) and the wheel (3).

6. Brake disc arrangement according to one of the preceding claims, characterized in that the holding device (6) engages into a circumferential groove both at the inner and at the outer diameter of the friction rings (1, 2).

7. Brake disc arrangement according to one of the preceding claims, characterized in that the holding device (6) is screwed to the wheel (3), with plate springs (9) lying in the clamping line of a screw (7).

8. Brake disc arrangement according to one of the preceding claims, characterized by a heat shield (13) between the friction ring (1, 2) and the holding device (6).

9. Brake disc arrangement according to one of the preceding claims, characterized in that the screw connection takes place by means of a two-part sleeve.

10. Brake disc arrangement according to one of the preceding claims, characterized in that the holding device (6) consists of heat-resistant steel or CMC composite material.

11. Brake disc arrangement according to one of the preceding claims, characterized in that the holding device (6) is screwed axially to the friction rings (1, 2).

12. Brake disc arrangement according to one of the preceding claims, characterized in that channels are formed on the contact surfaces between the wheel (3) and the friction rings (1, 2).

13. Brake disc arrangement according to one of the preceding claims, characterized in that the friction rings (1, 2) abut the wheel (3) by way of contact lugs (14).

14. Brake disc arrangement according to one of the preceding claims, characterized in that the contact lugs (14) have a heat insulating layer, preferably of ceramics.

15. Brake disc arrangement according to one of the preceding claims, characterized in that the friction rings (1, 2) consist of a composite material.

16. Brake disc arrangement according to one of the preceding claims, characterized by a wheel brake disc of CFC or CMC material.

## Revendications

1. Structure de disque de frein, notamment pour freins à disque de véhicules à déplacement sur rails, comprenant un disque de frein de roue constitué d'au moins deux anneaux de friction (1, 2) qui sont fixés à une roue (3) au moyen d'une liaison entre disque et roue, le centrage radial et le guidage se faisant alors par l'intermédiaire d'une liaison par coulisseau (4, 5), tandis que pour l'immobilisation en direction axiale des anneaux de friction (1, 2) par rapport à la roue (3), il est disposé, entre les anneaux de friction (1, 2) et la roue (3), au moins un organe de retenue (6) du type pince, l'organe de retenue (6) étant alors fixé axialement sur l'âme de la roue et comportant deux branches de pince (6', 6") faisant saillie radialement vers l'extérieur, caractérisée en ce que l'organe de retenue (6) est en prise dans des organes de serrage (10, 11) qui sont bloqués dans des yeux des anneaux de friction (1, 2).

2. Structure de disque de frein selon la revendication 1, caractérisée en ce que l'organe de retenue (6) est en prise avec une certaine mobilité dans les organes de serrage (10, 11).

3. Structure de disque de frein selon la revendication 1 ou 2, caractérisée en ce que les branches de pince (6', 6") sont pourvues de saillies de serrage (6"') à leur extrémité située radialement à l'extérieur.

4. Structure de disque de frein selon l'une des revendications 1 à 3, caractérisée en ce que les yeux sont pratiqués dans des protubérances (12) des anneaux de friction (1, 2).

5. Structure de disque de frein selon l'une des revendications précédentes, caractérisée en ce que l'organe de retenue (6) est mis en place en tension entre les anneaux de freinage ou de friction (1, 2) et la roue (3).

6. Structure de disque de frein selon l'une des revendications précédentes, caractérisée en ce que l'organe de retenue (6) s'engage dans une rainure circonférentielle, aussi bien au niveau du diamètre intérieur qu'au niveau du diamètre extérieur des anneaux de friction (1, 2).

7. Structure de disque de frein selon l'une des revendications précédentes, caractérisée en ce que l'organe de retenue (6) est assemblé par vissage à la roue (3), des rondelles-ressorts (9) étant placées dans la ligne de serrage d'une vis (7).

8. Structure de disque de frein selon l'une des revendications précédentes, caractérisée par une tôle de protection thermique (13) entre un anneau de friction (1, 2) et l'organe de retenue (6).

9. Structure de disque de frein selon l'une des revendications précédentes, caractérisée en ce que l'assemblage par vissage s'effectue au moyen d'une douille en deux éléments.

10. Structure de disque de frein selon l'une des revendications précédentes, caractérisée en ce que l'organe de retenue (6) est constitué d'acier résistant à la chaleur ou d'un matériau composite CMC.

11. Structure de disque de frein selon l'une des revendications précédentes, caractérisée en ce que l'organe de retenue (6) est vissé axialement sur les anneaux de friction (1, 2).

12. Structure de disque de frein selon l'une des revendications précédentes, caractérisée en ce que des sillons sont formés sur les surfaces de contact entre la roue (3) et les anneaux de friction (1, 2).

13. Structure de disque de frein selon l'une des revendications précédentes, caractérisée en ce que les anneaux de friction (1, 2) s'appliquent sur la roue (3) par l'intermédiaire de tétons de contact (14).

14. Structure de disque de frein selon l'une des revendications précédentes, caractérisée en ce que les tétons de contact (14) présentent une couche calorifuge, de préférence en céramique.

15. Structure de disque de frein selon l'une des revendications précédentes, caractérisée en ce que les anneaux de friction (1, 2) sont constitués d'une matière composite.

16. Structure de disque de frein selon l'une des revendications précédentes, caractérisée par un disque de frein de roue en un matériau CFC ou CMC.
